Europäisches Patentamt

(19) European Patent Office

Office européen des brevets

(11) Publication number: **0 075 042**
**B1**

# EUROPEAN PATENT SPECIFICATION

(45) Date of publication of patent specification: **30.12.86**

(21) Application number: **81109017.4**

(22) Date of filing: **27.10.81**

(51) Int. Cl.⁴: **B 29 C 45/26**

(54) Hot sprue assembly for an injection molding machine.

(30) Priority: **23.09.81 US 304422**

(43) Date of publication of application:
**30.03.83 Bulletin 83/13**

(45) Publication of the grant of the patent:
**30.12.86 Bulletin 86/52**

(84) Designated Contracting States:
**AT BE CH DE FR GB IT LI LU NL SE**

(56) References cited:
**FR-A-2 372 691**
**US-A-4 077 756**
**US-A-4 304 544**

(73) Proprietor: **DISCOVISION ASSOCIATES**
**3300 Hyland Avenue**
**Costa Mesa California 92626 (US)**

(72) Inventor: **Morrison, Rocky V.**
**1902 Carnegie Lane**
**Redondo Beach California 90278 (US)**

(74) Representative: **Fleuchaus, Leo, Dipl.-Ing. et al**
**Fleuchaus & Wehser Melchiorstrasse 42**
**D-8000 München 71 (DE)**

Courier Press, Leamington Spa, England.

## Description

This invention relates generally to injection molding machines, and more particularly, to injection molding machines including means for controlling flow of molten material into a mold cavity of a machine molding assembly designed for molding a centrally apertured record disc, such as a video information disc, and for molding a central aperture into such disc.

A type of injection molding machine has a molding assembly with first and second mold halves reciprocally movable between a closed position defining an annular mold cavity into which molten disc-forming material of plastic or the like is injected to form a video information disc, and an open position wherein the mold cavity is opened and the resultant molded video information disc is removed from the machine. The mold cavity is lined by one or more disc-shaped stamping dies carried by the mold halves, and these stamping dies include surface geometries representative of the information to be formed on the disc.

In injection molding machines of this general type, it is well known to inject molten plastic material under pressure from an injector gun assembly through a hot sprue bushing and into the mold cavity. When the mold cavity is filled with the molten plastic material, the surrounding machine structure including the respective mold halves, the stamping dies, and the hot sprue bushing are commonly cooled by a circulating liquid coolant to reduce the temperature of the molten plastic material and thereby solidify the material. After solidification, the hardened information disc is removed from the machine and the cycle is restarted, thereby allowing a relatively rapid production rate of the information discs. However, the plastic material within the sprue bushing typically has a relatively large thickness compared with the plastic material within the mold cavity, whereby the plastic material within the sprue bushing takes the longest time to solidify. The cycle time for molding the information discs in machines of this type therefore tends to be dependent upon the longer cooling time of the material within the sprue bushing, and not upon the shorter cooling time of the material within the mold cavity. Moreover, this material within the sprue bushing when solidified comprises wasted plastic material which must be removed from the molded information disc, typically by means of a punch assembly or the like which simultaneously forms a central aperture in the disc to permit the disc to be placed upon the spindle of an appropriate playback machine.

Formation of the central aperture by means of the conventional punch assembly poses a variety of problems in the production of the information discs. For example, the punching step requires a certain cycle time to perform, thereby undesirably prolonging the cycle time for each information disc. Moreover, the use of the punch assembly results in an aperture shape having a concentricity dependent upon the state of wear of the punch die. As punch die wear progresses with deteriorating concentricity, the likelihood of the creation of debris in the vicinity of the aperture increases, and such debris can deleteriously affect the quality of a subsequently molded information disc. Finally, the use of a punch assembly places the information disc under substantial stress which can crack an otherwise acceptable disc in the region of the central aperture, resulting in rejection of the disc as scrap.

Some devices have been proposed to mold the central aperture into the information disc prior to solidification of the disc-forming material and thereby avoid use of a punch assembly. One method utilizes a valve member movable across the mold cavity into engagement with the sprue bushing to mold the central aperture into the disc while controlling flow of molten material into the mold cavity. Another method utilizes a poppet valve structure movable through the mold cavity and engageable with the sprue bushing to mold a central aperture into the disc while controlling flow of molten material into the mold cavity. Another method utilizes a sleeve-type valve cooperating with a sprue bushing to mold a central aperture into a record disc while controlling flow of molten material into the mold cavity. In all of these designs, however, relatively complex and expensive movable valve members and associated actuation devices are required to provide the controlled movement of the valve member with respect to the sprue bushing.

An apparatus and a method of controlling flow of molten disc-forming material into a disc-shaped mold cavity in an injection molding machine for producing centrally apertured record discs have been suggested in EP—A—66 650 which has to be considered under the terms of Article 54(3) EPC.

The apparatus according to EP—A—66 650 comprises a sprue assembly forming an open and relatively narrow gate for passage of the molten disc-forming material into the mold cavity, said gate being disposed in a plane recessed slightly from the general plane of the disc adjacent the gate, said sprue assembly including a sprue bushing having a central bore formed therein for passage of the molten disc-forming material toward the mold cavity, and dispersion means having a plurality of relatively small extrusion passages formed therein, said dispersion means being mounted generally within the end of said bore adjacent said mold cavity for passage of the molten disc-forming material through said extrusion passages prior to passage through said gate, said sprue assembly further including means positioned within the mold cavity for molding a central aperture into the disc prior to solidification of the disc-forming material; and heater means for maintaining the disc-forming material in a molten state as it passes through said gate towards said mold cavity.

The method according to EP—A—66 650 comprises the step of:

injecting molten disc-forming material through a sprue bushing having a central bore formed therein for passage of the material toward the mold cavity through a gate disposed in a plane recessed slightly from the general plane of the disc adjacent the gate to fill the mold cavity; molding a central aperture into the disc with a die plug positioned within the mold cavity; relieving the pressure of the disc-forming material after the mold is filled; and creating a preselected temperature gradient between the sprue bushing and the mold cavity during the cooling stage of the molded disc for permitting solidification of the disc-forming material within the mold cavity substantially up to the gate without substantial solidification of disc-forming material upstream of the gate.

It is an object of the invention to provide a modified hot sprue assembly wherein controlled flow of molten material into the mold cavity is achieved in the absence of movable valve members and associated actuation devices, and wherein a central aperture is molded directly into an information disc prior to solidification of disc-forming material.

The present invention is embodied in an apparatus and a method of controlling flow of molten disc-forming material into a disc-shaped mold cavity in an injection molding machine for producing centrally apertured record discs as specified respectively in claims 1 and 13.

Further developments of the invention are subject of subclaims.

The features and advantages of the present invention will become apparent from the following detailed description, taken in conjunction with the accompanying drawings which illustrate, by way of example, the principles of the invention.

The accompanying drawings illustrate an embodiment of the invention. In such drawings:

Figure 1 is a simplified cross-sectional view of an injection molding machine including a hot sprue assembly.

Figure 2 is an enlarged fragmented cross-sectional view illustrating the hot sprue assembly

Figure 3 is a top plan view of one portion of the hot sprue assembly;

Figure 4 is an enlarged fragmented cross-sectional view corresponding to the reference circle "4" in Figure 2, and illustrating in detail a portion of the hot sprue assembly;

Figure 5 is an enlarged fragmented cross-sectional view illustrating the hot sprue assembly of this invention; and

Figure 6 is an enlarged fragmented horizontal section taken generally on the line 6—6 of Figure 5.

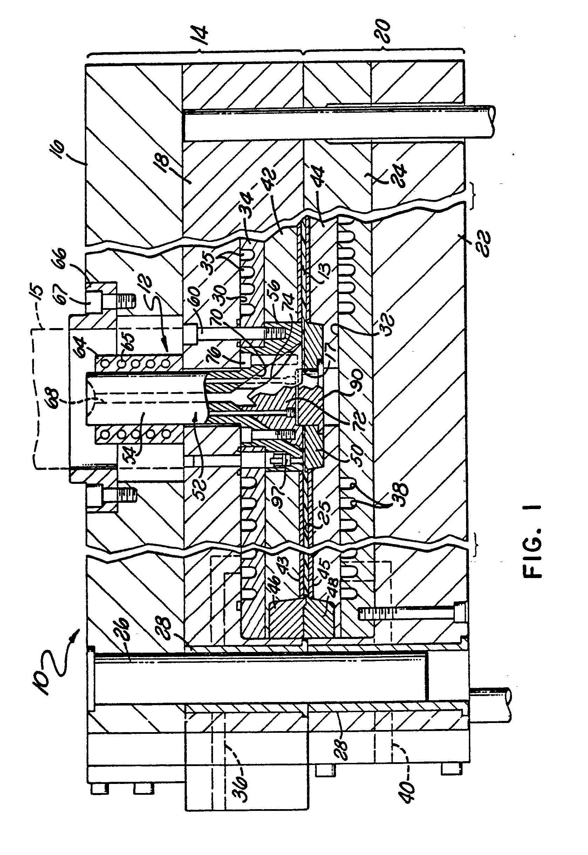

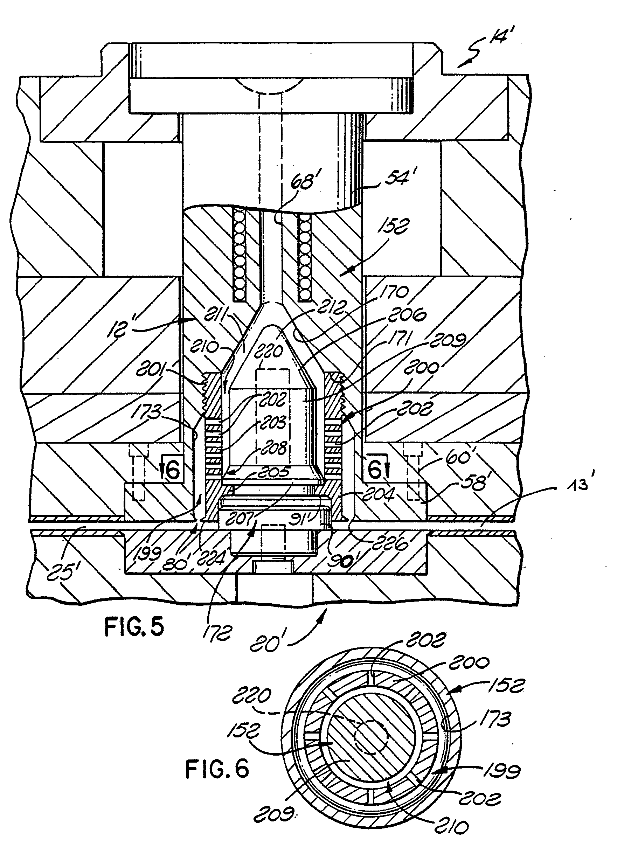

The following figure 1 through 4 describe an embodiment which is subject of EP—A—66 650 and on which the description of figure 5 and 6 relies without claiming the features covered by EP—A—66 650.

Referring now to the drawings, and particularly to Figure 1, there is shown a molding apparatus 10 for use in combination with an injection molding machine (not shown). The molding apparatus 10 includes a hot sprue assembly 12 to produce a centrally apertured record disc, such as a video information disc 13.

The molding apparatus 10 comprises a first mold half 14 including a base plate 16 and a carrier plate 18, and a second mold half 20 including a base plate 22 and a carrier plate 24. The first and second mold halves 14 and 20, along with their associated base and carrier plates 16, 18, and 22, 24 are reciprocally movable toward and away from each other to open and close a relatively thin, substantially planar mold cavity 25 in which the information disc 13 is molded. More specifically, the mold halves 14 and 20 are movable between a closed position with their carrier plates 18 and 24 in abutting relation with each other to define the mold cavity 25, as shown in Figure 1, and an open position with the carrier plates 18 and 24 retracted or separated from each other (not shown). A plurality of guide pins 26, one of which is shown in Figure 1, are secured to the first mold half 14 and slidably received within bushings 28 in the carrier plate 18 and the second mold half 20 to maintain the two mold halves in a desired axial alignment with each other.

The carrier plates 18 and 24 of the two mold halves 14 and 20 respectively include annular plate-shaped recesses 30 and 32 facing toward each other generally in axial alignment. As illustrated, the upper carrier plate 18 receives within the recess 30 an annular support plate 34 having a plurality of flow passages 35 formed therein for circulation of a suitable liquid coolant supplied through an inlet 36. Similar coolant flow passages 38 are formed in the lower carrier plate 24 for circulation of a liquid coolant supplied via a lower inlet 40. The support plate 34 and the lower carrier plate 24 in turn respectively carry annular platens 42 and 44 which can be secured in position in a suitable manner such as by bolts or the like (not shown).

The annular platens 42 and 44 respectively carry annular disc-shaped stamping dies 43 and 45, wherein at least one of the dies has a surface configuration representative of the information to be cast into the molded information disc. These stamping dies cooperate with each other, when the mold halves 14 and 20 are in the closed position, to define the disc-shaped mold cavity 25. Annular clamping rings 46 and 48 can be provided about the circumference of the mold cavity 25 for securing the stamping dies 43 and 45 in fixed positions to their respective platens 42 and 44, all in a well-known manner. If desired, annular center clamps can also be provided for securing the stamping dies in position, such as the lower clamp 50 shown in Figure 1.

The hot sprue assembly 12 is secured to the first mold half 14 for controlled passage of a suitable molten disc-forming material, such as a molten plastic material, under pressure from an injector gun assembly into the mold cavity 25.

More specifically, the injector gun assembly has a construction generally conventional in the art for supplying the disc-forming material in a heated, flowable molten state in an appropriate quantity and under an appropriate pressure through an assembly nozzle 15 to the hot sprue assembly 12. The hot sprue assembly 12 guides the molten material through the base plate 16 and the carrier plate 18 of the first mold half 14 for admission or injection into the disc-shaped mold cavity 25. The material enters and fills the mold cavity where it assumes the shape of the desired information disc 13 and is solidified or frozen by cooling of the material upon circulation of liquid coolant through the flow passages 35 and 38. Importantly, the hot sprue assembly 12 is designed to create and accurately control a temperature gradient between the sprue assembly and the mold cavity 25 during this cooling stage to permit material within the mold cavity to solidify without substantial solidification of the material within the sprue assembly. Moreover, the sprue assembly includes simplified apparatus for molding a central aperture 17 of a desired size and shape into the information disc 13 prior to solidification of the disc-forming material.

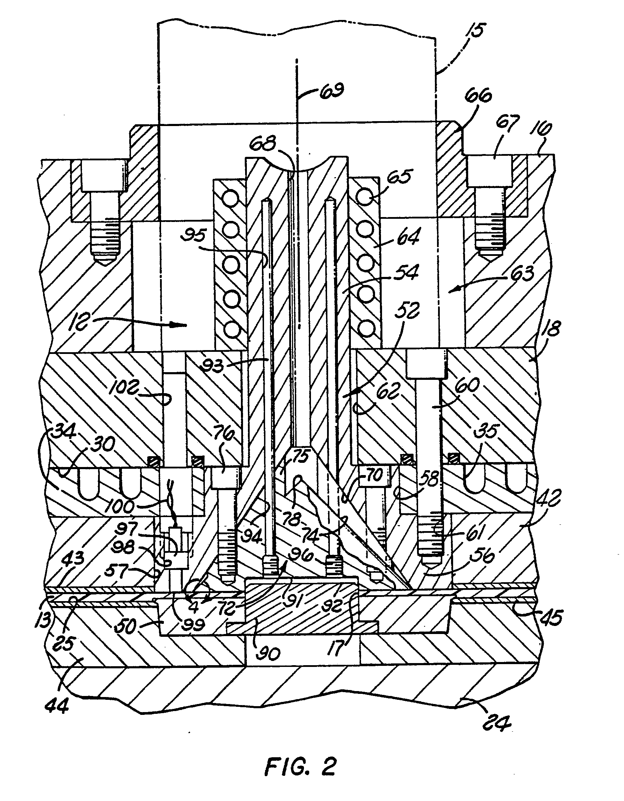

The hot sprue assembly 12, is illustrated in detail in Figures 2—4. As shown best in Figure 2, the sprue assembly 12 comprises a sprue bushing 52 formed from a suitable rigid material such as tool steel or the like to have an elongated cylindrical upper shank 54 received by the nozzle 15 of the injector gun assembly and a radially enlarged lower mounting block 56 secured to the first mold half 14. More specifically, the mounting block 56 is sized for reception within matingly shaped openings 57 and 58 of the upper platen 42 and the support plate 34. A plurality of mounting screws 60, one of which is shown in Figures 1 and 2, are received downwardly through the carrier plate 18 and fastened into threaded openings 61 in the mounting block 56 to secure the sprue bushing 52 rigidly upon the first mold half.

The upper shank 54 of the sprue bushing 52 projects upwardly from the mounting block 56 through a central opening 62 in the carrier plate 18 and into an enlarged chamber 63 formed within the base plate 16. A heater device 64, such as a ceramic clamping collar encasing an electrical resistance heater coil 65, is positioned within this chamber 63 about the upper end of the shank 54 and is coupled in an appropriate manner (not shown) to a source of electrical energy for elevating the temperature of the shank. The nozzle 15 of the injector gun assembly is fitted over the heater device 64 and the upper end of the shank 54 to supply the molten disc-forming material to the sprue bushing. Conveniently, as illustrated, the nozzle 15 is secured in position by a retaining ring 66 fastened to the base plate 16 as by screws 67.

In operation, the injector gun assembly supplies molten disc-forming material at an appropriate temperature and pressure to the upper end of the sprue bushing 52. This molten material is directed into a central bore 68 in the sprue bushing shank 54 for flow in a downward direction, as viewed in Figure 2, toward the mold cavity 25 generally along a central axis 69 of the mold cavity. At the lower end of the sprue bushing shank 54, the bore 68 blends into an enlarged and downwardly open conical recess or chamber defined by a downwardly diverging conical face 70 within the sprue bushing mounting block 56. As illustrated, this conical face 70 extends from the bore 68 axially downwardly toward the mold cavity and radially outwardly with respect to the cavity central axis 69.

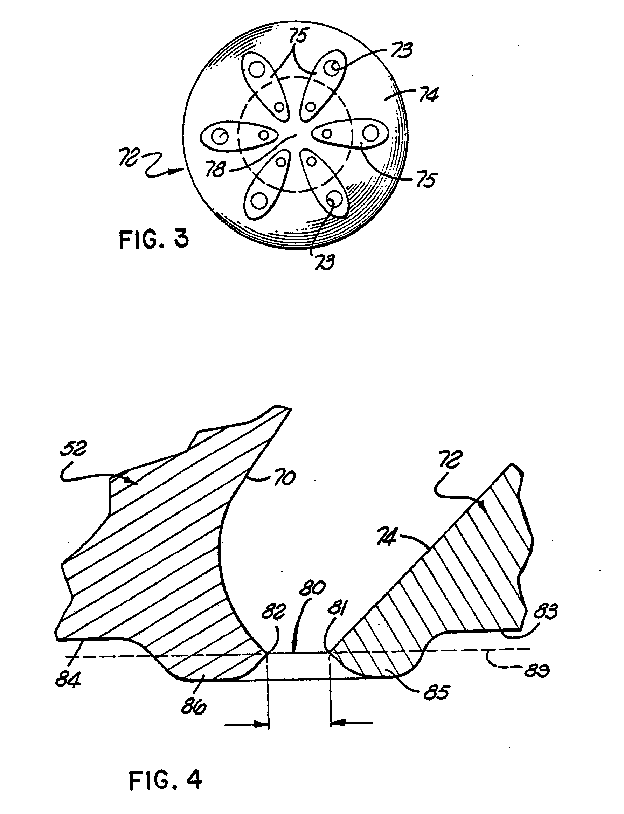

A dispersion head 72 is secured to the sprue bushing within the conical chamber and cooperates with the sprue bushing conical face 70 to guide the molten material from the bore 68 toward the mold cavity 25 with substantially uniform radial distribution. More specifically, as viewed in Figures 2 and 3, the dispersion head 72 is shaped to have a conical face 74 presented in a downward direction toward the conical face 70 of the sprue bushing. A circumferentially arranged plurality of spacer flights 75 project upwardly from the dispersion head conical face 74 into mating abutting engagement with the sprue bushing conical face 70 to maintain the faces 70 and 74 in vertically spaced relation to each other, and thereby define an annular flow path for the molten material. Conveniently, these spacer flights also include vertically extending openings 73 for passage of connecting screws 76 downwardly from the mounting block 56 into threaded engagement with the dispersion head 72 for securely mounting the dispersion head on the sprue bushing. Accordingly, the dispersion head 72 remains in a fixed position with respect to the sprue bushing 52 upon opening and closing of the mold halves 14 and 20 during production, as will be described in more detail.

The upper ends of the spacer flights 75 are shaped to matingly engage the sprue bushing conical face 70 for accurate alignment of the dispersion head apex 78 along the central axis 69 of the mold cavity. In this position, the aligned apex 78 of the dispersion head 72 divides the molten material passing from the bore 68 into a substantially uniform annular flow stream for passage between the conical faces 70 and 74 toward the mold cavity. This annular flow stream of material is further divided by the circumferentially arranged spacer flights 75, six of which are illustrated in Figure 3, into a radially arranged plurality of smaller flow streams which tends to enhance further the uniformity of radial distribution of the material. Importantly, the spacer flights 75 are configured with smoothly contoured cross-sectional shapes for smooth flow of the material downwardly and radially outwardly toward the mold cavity. The lower, radially outer edges of the spacer flights 75 terminate slightly short of the mold cavity to permit the smaller flow streams to reunite into a single homogeneous flow stream prior to injection into the mold cavity.

The conical faces 70 and 74 of the sprue bushing 52 and the dispersion head 72 may be angularly disposed with respect to each other, as viewed in Figure 2, to converge vertically toward each other from the bore 68 to the mold cavity 25. With this construction, the molten material tends to be accelerated as it flows toward the mold cavity resulting in increased frictional resistance to material flow and a corresponding increase in material homogeneity and temperature. This helps to prevent premature solidification of any portion of the material and assists in a more thorough recombining of the smaller flow streams into one homogeneous annular flow with substantially uniform radial distribution prior to injection into the mold cavity. Moreover, this configuration minimizes the total volume of material in close proximity with the mold cavity and thereby minimizes the potential for material solidification between the adjacent conical faces 70 and 74.

The dispersion head 72 cooperates with the sprue bushing 52 to form an annular opening, or gate 80, for passage of the molten material into the mold cavity 25. This annular gate 80 is defined by the geometric contouring of the lower, peripheral edges of the two conical faces 74 and 70, as illustrated in detail in Figure 4. Importantly, the sprue bushing 52 and the dispersion head 72 are fixed with respect to each other such that the annular gate 80 is open during all conditions of machine operation. Control of material flow through the gate 80 is achieved by control of material temperature and pressure during machine operation to permit the omission of moving valve members to open and close the gate.

As shown in Figure 4, the conical face 74 of the dispersion head 72 extends axially downwardly and radially outwardly toward the mold cavity 25 and terminates as a radially outwardly presented, relatively sharp edge 81 forming the inner diameter of the gate 80. Similarly, the conical face 70 of the sprue bushing extends axially downwardly and radially outwardly toward the mold cavity, but the lower extent of this conical face 70 is contoured to curve radially inwardly toward the dispersion head and terminates in a radially inwardly presented, relatively sharp edge 82 forming the outer diameter of the gate 80. The edges 81 and 82 are closely spaced from each other to provide a narrow, annularly open passage for flow of the molten material into the mold cavity. In a typical operating environment, the radial spacing between the edges 81 and 82 is chosen to be on the order of about 127 microns to about 500 microns.

The gate 80 is positioned in a plane recessed slightly into the mold cavity 25. More specifically, the upper plane of the mold cavity 25 and thus the upper general plane of the information disc 13 is defined by the upper stamping die 43 and by the lower faces 83 and 84, respectively, of the dispersion head 72 and the sprue bushing 52. However, adjacent the gate 80, the dispersion head 72 and the sprue bushing 52 respectively include narrow annular projections 85 and 86 depending from the faces 83 and 84 slightly into the mold cavity 25. These projections cooperate with each other to form a narrow annular boss extending downwardly into the mold cavity a short distance, such as on the order of about 127 microns, and having a narrow overall radial width, such as on the order of about 735 microns. Importantly, these projections 85 and 86 define the edges 81 and 82 of the gate wherein these edges are disposed in a plane 89 recessed at least a few hundredth of mm below the upper general plane of the information disc. From the edges 81 and 82, the projections 85 and 86 are contoured to sweep downwardly respectively in generally radially inward and generally radially outward directions to guide molten material smoothly into the mold cavity.

The molding apparatus 10 is operated by closing the two mold halves 14 and 20 to define the mold cavity 25. The sprue assembly 12 including the sprue bushing 52 and the dispersion head 72 is carried by the first mold half 14 to the closed position, as viewed in Figures 1 and 2. During this movement, the dispersion head 72 is aligned with respect to the second mold half 20 by cooperation with a central die plug 90 secured to the second mold half by the center clamp 50. This central die plug 90 has a generally cylindrical shape projecting upwardly into and through the mold cavity 25 for close reception into a matingly-shaped cylindrical recess 91 formed centrally in the lower face 85 of the dispersion head 72. The die plug 90 has a cross-sectional size and shape corresponding with the size and shape of the desired central aperture 17 to be formed in the information disc 13. The die plug 90 thus cooperates with the dispersion head, when the mold cavity is closed, to mold the central aperture 17 directly into the information disc. Conveniently, the upper peripheral edge 92 of the die plug 90 is bevelled for smooth, guided reception into the dispersion head recess 91.

When the mold cavity 25 is closed, the injector gun assembly is operated in a suitable manner to supply molten disc-forming material to the hot sprue assembly 12. This material is injected under relatively high pressure on the order of several hundred kg/cm$^2$ through the sprue bushing bore 68 and further between the bushing and dispersion head conical faces 70 and 74 to the annular gate 80. The molten material passes through the gate 80 and into the mold cavity 25 to fill and pack the mold cavity with the disc-forming material. As soon as the mold cavity is filled and packed as desired, the injector gun assembly is controlled to relieve substantially the pressure applied to the material, and liquid coolant is circulated through the flow passages 35 and 38 to cool the material within the mold cavity to a solidified state to form the molded information disc.

Cooling of the material within the mold cavity 25 is continued until the material is substantially fully solidified whereupon the mold cavity can be opened by separation of the mold halves 14 and 20 to permit removal of the solidified disc 13 from the machine. However, this cooling of the material is controlled closely to permit solidification substantially up to the annular gate 80 without substantial solidification of disc-forming material remaining within the hot sprue assembly.

More particularly, the heater device 64 at the upper end of the sprue bushing shank 54 provides a source of heat energy which is transferred to the sprue bushing and further to the dispersion head 72 to create and maintain a controlled temperature differential between the sprue assembly 12 and the mold cavity 25 during the solidification process. As illustrated in Figure 2, the sprue assembly includes heat transfer means of high thermal conductivity for efficiently transferring the heat energy to the dispersion head 72. These heat transfer means are advantageously provided in the form of thermal pins or cartridges 93 each received upwardly and snugly within a hole 94 formed within the dispersion head 72 to extend through an associated spacer flight 75 and further upwardly into an aligned hole 95 in the sprue bushing 52. Set screws 96 are conveniently threaded into the lower ends of the holes 94 to lock the cartridges in position.

The thermal cartridges 93 are selected from a material or materials having a thermal conductivity substantially greater than the thermal conductivity of the sprue bushing 52, whereby the cartridges efficiently transfer heat energy from the upper end of the sprue bushing downwardly to the dispersion head. While these cartridges can be constructed from a variety of materials, one preferred construction comprises a hollow copper tube filled with a highly heat-conductive rarified gas, such as, for example, a so-called thermal pin of the type manufactured and sold by the Kona Corporation of Gloucester, Massachusetts.

The heat energy input of the heater device 64 is closely controlled to correspondingly control the temperature of the dispersion head 72 to permit solidification of the material within the mold cavity substantially up to the gate 80 without substantial solidification of material within the sprue assembly. In operation of the molding apparatus, this requires the heater device 64 to be controlled such that the boundary between physical states of the material, namely, solidified material within the mold cavity and molten material within the sprue bushing is located substantially at the gate 80. As soon as this desired solidification has occurred, the two mold halves 14 and 20 can be separated to open the mold cavity 25 and to expose the solidified disc 13 for removal from the machine.

The narrow annular gate 80 provides a sharply defined separation point between the mold cavity 25 and the sprue assembly 12 which permits the mold halves to be opened without significant disruption of the surface of the disc 13 in the vicinity of the gate. That is, when the material within the mold cavity solidifies up to the gate, the gate can be withdrawn from the solidified disc without undue disruption of the disc surface. If the physical state boundary is located precisely at the gate, the portion of molten material within the sprue assembly in the vicinity of the gate tends to have a temperature relatively closely to solidification temperature, resulting in a relatively high material viscosity to prevent drooling from the gate when the mold halves are opened. Alternately, if the physical state boundary is slightly above the gate, the plastic disc-forming material tends to fracture relatively cleanly at the narrow gate when the mold halves are opened to leave a thin film of solidified material within the sprue assembly sealing the gate against drooling. In either event, the gate 80 is recessed slightly into the disc such that any slight surface discontinuity arising from opening of the mold halves is recessed below the general plane of the disc where it does not interfere with or impair normal use. Conveniently, any such discontinuities are advantageously positioned near the disc central aperture 17 where they are readily covered from view by subsequent application to the disc of a standard identification label.

After extraction of the solidified disc 13 from the apparatus, the mold halves 14 and 20 are again closed to define the mold cavity 25. The injector gun assembly is again operated to inject molten disc-forming material through the sprue assembly and into the mold cavity to form a subsequent information disc 13. To the extent a thin film of solidified material may have remained in the sprue assembly sealing off the gate 80, such film is of insufficient thickness to withstand the injection pressure applied by the injector gun assembly. Accordingly, the thin solidified film is forced through the gate into the mold cavity where it remelts, remixes, and rehomogenizes with the remainder of the material injected into the mold cavity. Following injection, the mold cavity is again cooled to solidify the material up to the gate without substantial solidification within the sprue assembly, whereupon the mold halves are separated, the disc is removed, and the cycle is repeated.

Precise control of the heat input provided by the heater device 64 can be obtained by measurement of the temperature of the disc-forming material within the mold cavity 25 adjacent the gate 80. To this end, a temperature sensing transducer 97 can be installed within a passage 98 in the sprue bushing mounting block 56, and this transducer 97 includes a sensing face 99 lining the mold cavity adjacent the gate. From a knowledge of the solidification characteristics of the particular disc-forming material, this transducer 97 can be calibrated to provide a signal on a conductor 100 which can extend away from the transducer through openings 102 in the first mold half for connection to an appropriate controller (not shown) for the heater device 64. This signal can be utilized to control the temperature gradient between the sprue assembly and the mold cavity for solidification of the material in the cavity up to the gate.

Additional controlling devices can also be provided to control operation of the molding apparatus. For example, additional transducers may be mounted upon the sprue bushing or elsewhere for sensing the pressure of the material within the mold cavity. Such a pressure sensitive transducer can be used, for example, to provide a control signal to the injector gun assembly for indicating satisfactory filling and packing of the mold cavity.

A hot sprue assembly according to the invention is illustrated in Figures 5—6 wherein components identical to the embodiment of Figures 1—4 are designated by common primed reference numerals. As illustrated, the hot sprue assembly 12 comprises a sprue bushing 152 having an elongated cylindrical upper shank 54' with a bore 68' formed therein for downward passage of molten disc-forming material which can be injected thereinto by an injector gun assembly (not shown), generally in the same manner as described with respect to Figures 1—4. This sprue bushing 152 includes a radially enlarged lower mounting block 58' to facilitate securing thereof to a first mold half 14' as by use of screws 60'.

The sprue bushing 152 is desirably associated with heating means such as a ceramic clamping collar encasing an electrical resistance heater element (not shown in Figure 5) of the type illustrated in Figure 2. Alternately, other types of heating means can be used such as an electrical resistance heater coil encased within the shank 54' of the bushing. In any event, the heating means provides heat energy to control the temperature level and resultant molten state of the disc-forming material injected through the sprue bushing bore 68' to maintain this material in a molten state as it passes toward a mold cavity 25'. This mold cavity 25' is defined by the first mold half 14' in conjunction with a second mold half 20' when the two mold halves are moved in a well-known manner into bearing engagement with each other. When the mold halves 14' and 20' are so positioned, molten disc-forming material can be injected into the mold cavity 25' and solidified or frozen to form an information disc 13' having the desired surface discontinuities formed thereon.

The injected disc-forming material flows downwardly through the sprue bushing bore 68', as viewed in Figure 5, and enters an enlarged and downwardly open conical recess or chamber defined by a downwardly diverging conical face 170 formed within the sprue bushing 152. This conical face 170 merges at its lower extent with an axially downwardly presented shoulder 171 formed at the upper end of an enlarged bore 173. Importantly, an upper portion of this bore 173 is internally threaded to provide a mounting means for a modified dispersion head 172 which cooperates with the sprue bushing 152 to define a prescribed combination of flow paths for the molten material between the bushing bore 68' and the mold cavity 25'.

The dispersion head assembly 172 comprises, in its preferred form, an extrusion head constructed generally in accordance with the pipe extrusion head manufactured and sold by NRM Corporation under the name "Gaugemaker Die". More particularly, the dispersion head assembly 172 includes a cylindrical extrusion sleeve 200 which has an externally threaded upper portion 201 for threaded reception into the threaded bore 173 of the sprue bushing 152 with the upper axial end of the sleeve in snug, sealing engagement with the shoulder 171 on the bushing. Below the threaded portion 201, the extrusion sleeve 200 has a perforated central portion 203 to include a relatively large number of extrusion passages 202 which are defined by an array of relatively small and relatively closely spaced holes through the sleeve. These extrusion passages, which typically have a size on the order of about 500 microns to about 1 500 microns, open in a radial direction for extrusion passage of the molten disc-forming material, as will be described herein in more detail.

The extrusion sleeve 200 further includes an imperforate lower portion 204 which projects downwardly toward the mold cavity 25' and has an outer diameter sized for cooperating with the sprue bushing 152 to define a relatively narrow annular flow path 199. As shown, this sleeve lower portion 204 includes an internal and inwardly radiating flange 205 for supporting a contoured dispersion head 206. This contoured dispersion head 206 cooperates with the extrusion sleeve 200 and the sprue bushing 152 to force the disc-forming material through the extrusion passages 202 in the sleeve.

More particularly, the dispersion head 206 includes a generally cylindrical base 207 sized for seated and substantial self-centered positioning upon the support flange 205. If desired, this base 207 can be secured rigidly to the flange. From the base 207, the dispersion head tapers upwardly and radially inwardly, as illustrated in 208, toward an upstanding lower cylindrical portion 209 of substantially uniform cross section. This lower cylindrical portion 209 is sized with respect to the extrusion sleeve 200 to define therebetween a relatively narrow annular flow path 210. The upper extent of this flow path 210 merges with the lower extent of a downwardly expanding annular flow path 211 defined between the sprue bushing conical face 170 and a conical upper portion 212 of the dispersion head 206.

In operation, the molten disc-forming material is injected downwardly through the sprue bushing bore 68' against the dispersion head 206. The upper conical portion 212 of the dispersion head divides the material into an annular, downwardly expanding flow stream within the flow path 211. The injected material travels further downwardly into the annular flow path 210 from where the material extrudes under the injection pressure through the extrusion passages 202 formed in the extrusion sleeve. This extruded molten material then enters the outer annular flow path 199 for further travel downwardly toward the mold cavity 25'. Importantly, the large number of small extruded portions of the molten material exiting the extrusion passages 202 tend to remix relatively turbulently with each other within the outer flow path 199, resulting in a highly homogeneous remixing of the material prior to entry into the mold cavity to prevent formation of undesirable "witness" or "knit" lines in the molded product.

The lower portion 204 of the extrusion sleeve 200 includes a lower, peripheral edge 224 which cooperates with the adjacent, annularly spaced edge 226 of the sprue bushing 152 to define a narrow annular gate 80' opening from the outer annular flow path 199 into the mold cavity 25'. This gate 80' is generally identical to the gate shown and described with respect to Figures 1—4. More particularly, the gate 80' is geometried to be recessed slightly below the upper general plane of the disc 13' being molded to prevent formation of any surface discontinuity above the general plane of the disc. Moreover, the gate is adapted, with proper control of the temperature gradient between the mold cavity and the sprue bushing, to provide an annularly narrow boundary for the physical states of solid material within the mold cavity and molten material within the sprue assembly. Accordingly, the sprue assembly of this invention permits a high production rate of high quality discs 13' without requiring moving valve parts as a portion of the sprue assembly.

As viewed in Figure 5, the support flange 205 and the extrusion sleeve 200 cooperate to define a downwardly open, cylindrical recess 91' for reception of the upper end of a central die plug 90' when the mold halves are closed as shown. This die plug has a generally circular outer periphery positioned within the mold cavity 25' to mold a central aperture 17' of the desired size directly into the disc as the disc is formed, in generally the same manner as described with respect to Figures 1—4.

Accordingly, the embodiment of Figures 5—6 effectively controls injection of disc-forming molten material into a mold cavity in the absence of moving valve parts. This flow control is achieved by use of appropriate temperature gradient control between the sprue assembly and the mold cavity. If desired, the control over temperature can be enhanced by forming the dispersion head 206 to be hollow for reception internally of a heater element 220 such as a so-called thermal pin or an electrical resistance heater, illustrated in dotted lines in Figure 5, for increasing the heat flow to the dispersion head 206 in the vicinity of the extrusion passages 202 and the gate 80'.

The hot sprue assembly of this invention thus provides substantial improvements over hot sprue assemblies of the prior art by providing simplified apparatus and method for controlling flow of molten material into a mold cavity without requiring any moving valve parts or valve actuation devices. Moreover, the hot sprue assembly of this invention advantageously provides a simplified structure for molding a central aperture directly into an information disc prior to solidification of the disc-forming material.

**Claims**

1. For use with an injection molding machine for producing centrally apertured record discs, apparatus for controlling flow of molten disc-forming material into a disc-shaped mold cavity (25'), comprising: a sprue assembly (12') forming an open and relatively narrow gate (80') for passage of the molten disc-forming material into the mold cavity, said gate being disposed in a plane (89) recessed slightly from the general plane of the disc adjacent the gate, said sprue assembly including a sprue bushing (152) having a central bore (68') formed therein for passage of the molten disc-forming material toward the mold cavity, and dispersion means (172) having a plurality of relatively small extrusion passages (202) formed therein, said dispersion means being mounted generally within the end of said bore adjacent said mold cavity for passage of the molten disc-forming material through said extrusion passages prior to passage through said gate, said sprue assembly further including means (90') positioned within the mold cavity for molding a central aperture into the disc prior to solidification of the disc-forming material; and heater means (220) for maintaining the disc-forming material in a molten state as it passes through said gate (80') towards said mold cavity (25'); said dispersion means (172) cooperates with said sprue bushing (152) to define a first annular chamber (210) for receiving the molten disc-forming material, and a second annular chamber (199) communicating with said gate, said extrusion passages (202) permitting flow of the material from said first annular chamber into said second annular chamber, said first and second annular chambers being chambers extending axially.

2. The apparatus of Claim 1 wherein said gate (80') is generally annular in shape.

3. The apparatus of Claim 2 wherein said annular gate (80') has a radial width on the order of from about 127 microns to about 500 microns.

4. The apparatus of Claim 2 wherein said gate (80') is defined by an annular space between said sprue bushing (152) and said dispersion means (172) adjacent the mold cavity.

5. The apparatus of Claim 1 wherein said dispersion means (172) comprises a generally cylindrical sleeve (200) having said plurality of extrusion passages (202) formed therein.

6. The apparatus of Claim 5, wherein each of said extrusion passages (202) has an opening diameter on the order of from about 0.5 mm to about 1.5 mm.

7. The apparatus of Claim 5 wherein said sleeve (200) comprises a radial boundary between said first (210) and second (199) annular chambers, and wherein said second annular chamber is relatively narrow and has an axial length sufficient to permit rehomogenization of the material into a single annular flow stream prior to passage through said gate (80').

8. The apparatus of Claim 1 wherein said sprue bushing (152) is oriented with its central bore extending generally along a central axis of the mold cavity.

9. The apparatus of Claim 1 wherein said heater means (220) comprises a heating element carried within said dispersion means (172).

10. The apparatus of Claim 1 including a first mold half (14') and a second mold half (20') movable with respect to each other between a closed position to define the mold cavity and an open position to permit a molded disc to be removed from the machine, said sprue assembly (152) being mounted on said first mold half for movement therewith, and said die plug (90') being mounted on said second mold half to extend through the mold cavity when said mold halves are closed for cooperation with said dispersion means (172) to mold a central aperture into the disc prior to solidification of the disc-forming material.

11. The apparatus of Claim 10 wherein said die plug (90') has a generally cylindrical shape for close reception of its distal end into a matingly-shaped recess formed in said dispersion means (172) when said mold halves are closed.

12. The apparatus of Claim 1 wherein said bore (68') in said sprue bushing (152) has a first portion of relatively narrow cross section opening toward the mold cavity into a second portion of increased cross section, said dispersion means (172) being mounted generally within said second portion and including means for dividing the molten material into an annular flow stream prior to passage through said extrusion passages and for recombining the molten material downstream of said extrusion passages into a homogeneous flow stream prior to passage through said gate.

13. In an injection molding machine for producing centrally apertured record discs, a method of controlling flow of molten disc-forming material into a disc-shaped mold cavity (25') comprising the steps of: injecting molten disc-forming material through a sprue bushing (152) having a central bore (68') formed therein for passage of the material toward the mold cavity; dividing the material passing from said bore into a first annular flow stream; extruding the first annular flow stream (210) through an annularly-arranged plurality of relatively small extrusion passages (202); recombining the extruded material into a substantially homogeneous second annular flow stream (199); coupling the second annular flow stream for passage into the mold cavity through a gate (80') disposed in a plane (89) recessed slightly from the general plane of the disc adjacent the gate to fill the mold cavity; molding a central aperture into the disc with a die plug (90') positioned within the mold cavity; relieving the pressure of the disc-forming material after the mold is filled; and creating a preselected temperature gradient between the sprue bushing and the mold cavity during the cooling stage of the molded disc for permitting solidification of the disc-forming material within the mold cavity substantially up to the gate without substantial solidification of disc-forming material upstream of the gate.

14. The method of Claim 15 including the step of forming the gate (80') to have an annular shape closely surrounding the die plug (90') and extending axially with the annular chambers (210, 199).

**Patentansprüche**

1. Zur Verwendung mit einer Spritzguß-maschine zur Herstellung von Aufzeichnungs-platten mit einer Mittelöffnung, eine Einrichtung zur Steuerung der Strömung von geschmolzenem, zur Herstellung von Platten verwendetem Material in einen scheibenförmigen Formenhohlraum (25'), in der enthalten sind: ein Angußkanalzusammenbau (12'), der einen offenen und relativ engen Durchlaß (80') für den Durchgang des geschmolzenen, zur Herstellung von Platten verwendeten Materials in den Formenhohlraum bildet, wobei der genannte Durchlaß in einer Ebene (89) angeordnet ist, die geringfügig gegenüber der allgemeinen Ebene der benachbart zum Durchlaß liegenden Platte zurückversetzt ist, wobei der genannte Angußkanalzusammenbau eine Angußkanalhülse (152) enthält, in der eine Mittelbohrung (68) ausgebildet ist, um das geschmolzene, zur Ausbildung der Platte verwendete Material zum Formenhohlraum zu führen, und Verteilervorrichtungen (172) mit einer Vielzahl von darin ausgebildeten relativ kleinen Extrusionsdurchgängen (202), wobei die genannten Verteilervorrichtungen im allgemeinen am Ende der genannten Bohrung benachbart zum genannten Formenhohlraum montiert sind, um das geschmolzene, zur Ausbildung der Platte verwendete Material durch die genannten Extrusionsdurchgänge vor dem Durchgang durch den genannten Durchlaß zu führen, wobei der genannte Angußkanalzusammenbau weiter Vor-richtungen (90') enthält, die innerhalb des Formenhohlraums angeordnet sind, um eine Mittelöffnung in die Platte vor dem Erstarren des zur Ausbildung der Platte verwendeten Materials zu bilden; und Heizvorrichtungen (202), die das zur Ausbildung der Platte verwendete Material in einem geschmolzenen Zustand aufrechterhalten, wenn es durch den genannten Durchlaß (80') in Richtung auf den genannten Formenhohlraum (25') fließt; die genannten Verteilervorrichtungen (172) mit der genannten Angußkanalhülse (152) zusammenwirken, um eine erste ringförmige Kammer (210) zu definieren, die das geschmolzene, zur Ausbildung der Platte verwendete Material empfängt, und eine zweite ringförmige Kammer (199), die mit dem genannten Durchlaß in Verbindung steht, wobei die genannten Extrusionsdurchgänge (202) die Strömung des Materials von der genannten ersten ringförmigen Kammer in die genannte zweite ringförmige Kammer erlauben, wobei die genannten ersten und zweiten ringförmigen Kammern Kammern darstellen, die sich in axialer Richtung erstrecken.

2. Die Einrichtung von Anspruch 1, worin der genannte Durchlaß (80') eine im allgemeinen ringförmige Gestalt aufweist.

3. Die Einrichtung von Anspruch 2, worin der genannte ringförmige Durchlaß (80') eine radiale Breite in der Größenordnung von ungefähr 122 Mikrometer bis ungefähr 500 Mikrometer aufweist.

4. Die Einrichtung von Anspruch 2, worin der genannte Durchlaß (80') durch einen ringförmigen Zwischenraum zwischen der genannten Angußkanalhülse (152) und den genannten Verteilervorrichtungen (172) benachbart zum Formenhohlraum definiert wird.

5. Die Einrichtung von Anspruch 1, worin die genannten Verteilervorrichtungen (172) eine im allgemeinen zylindrische Muffe (200) enthalten, in der die genannte Vielzahl von Extrusionsdurchgängen (202) ausgebildet ist.

6. Die Einrichtung von Anspruch 5, worin jeder der genannten Extrusionsdurchgänge (202) einen Öffnungsdurchmesser der Größenordnung von ungefähr 0,5 mm bis ungefähr 1,5 mm aufweist.

7. Die Einrichtung von Anspruch 5, worin die genannte Muffe (200) eine radiale Grenze zwischen der genannten ersten (210) und zweiten (199) ringförmigen Kammer enthält und worin die genannte zweite ringförmige Kammer relativ eng ist und eine axiale Länge aufweist, die ausreicht, um die Rehomogenisierung des Materials in eine einzige ringförmige Strömung vor dem Durchgang durch den genannten Durchlaß (80') zu erlauben.

8. Die Einrichtung von Anspruch 1, worin die genannte Angußkanalhülse (152) so ausgerichtet ist, daß ihre Mittelbohrung sich im allgemeinen längs einer Mittelachse des Formenhohlraums erstreckt.

9. Die Einrichtung von Anspruch 1, worin die genannten Heizvorrichtungen (220) ein Heizelement enthalten, das innerhalb der genannten Verteilervorrichtunge (172) gehaltert ist.

10. Die Einrichtung von Anspruch 1, mit einer ersten Formhälfte (14') und einer zweiten Formhälfte (20'), die gegeneinander bewegbar sind zwischen einer geschlossenen Position, um den Formenhohlraum zu definieren, und einer offenen Position, um die Entnahme einer ausgeformten Platte aus der Maschine zu erlauben, wobei der genannte Angußkanalzusammenbau (152) auf der ersten Formhälfte montiert ist und mit dieser bewegt wird und der genannte Stempelzapfen (90') auf der zweiten Formhälfte montiert ist, um sich durch den Formenhohlraum zu erstrecken, wenn die genannten Formhälften geschlossen sind, damit durch Kooperation mit den genannten Verteilervorrichtungen (172) eine Mittelöffnung in der Plate vor dem Erstarren des zur Ausbildung der Platte verwendeten Materials geformt wird.

11. Die Einrichtung zum Anspruch 10, worin der genannte Stempelzapfen (90') eine im allgemeinen zylindrische Form aufweist, um mit seinem abgelegenen Ende mit engem Sitz in eine entsprechend geformte Vertiefung einzugreifen, die in den genannten Verteilervorrichtungen (172) gebildet ist, wenn die genannten Formhälften geschlossen sind.

12. Die Einrichtung von Anspruch 1, worin die genannte Bohrung (68') in der genannten Angußkanalhülse (152) einen ersten Teil mit einem relativ engen Querschnitt aufweist, der sich in Richtung auf den Formenhohlraum in einem zweiten Teil mit vergrößertem Querschnitt öffnet, wobei die genannten Verteilervorrichtungen (172) im allgemeinen innerhalb des genannten zweiten Teils montiert sind und Vorrichtungen enthalten, mit denen das geschmolzene Material in eine ringförmige Strömung vor dem Durchgang durch die genannten Extrusionsdurchgänge aufgeteilt wird und mit denen das geschmolzene Material stromabwärts der genannten Extrusionsdurchgänge in eine homogene Strömung vor dem Durchgang durch den genannten Durchlaß wiedervereinigt wird.

13. In einer Spritzgußmaschine zur Herstellung von Aufzeichnungsplatten mit einer Mittelöffnung ein Verfahren zur Steuerung der Strömung von geschmolzenem, zur Ausbildung der Platte verwendeten Material in einen scheibenförmigen Formenhohlraum (25'), in dem die Schritte enthalten sind: Einspritzen von geschmolzenem, zur Ausbildung der Platte verwendeten Material durch eine Angußkanalhülse (152), in der eine Mittelbohrung (68') ausgebildet ist, um Material in Richtung auf den Formenhohlraum zu führen; Aufteilen des Materials, das von der genannten Bohrung austritt in eine erste ringförmige Strömung; Extrudieren der ersten ringförmigen Strömung (210) durch eine ringförmige angeordnete Vielzahl von relativ kleinen Extrusionsdurchgängen (202); Rekombinieren des extrudierten Materials in eine im wesentlichen homogene zweite ringförmige Strömung (199); Koppeln der zweiten ringförmigen Strömung zum Durchgang in den Formenhohlraum durch einen Durchlaß (80'), der in einer Ebene liegt, die geringfügig gegenüber der allgemeinen Ebene der benachbart zum Durchgang liegenden Platte zurückgesetzt ist, um den Formenhohlraum zu füllen; Ausbilden einer Mittelöffnung in der Platte mit einem Stempelzapfen (90'), der innerhalb des Formenhohlraums angeordnet ist; Abbau des Drucks im zur Ausbildung der Platte verwendeten Material nach dem Füllen der Form; und Erzeugen eines vorgewählten Temperaturgradienten zwischen der Angußkanalhülse und dem Formenhohlraum während der Abkühlphase der geformten Platte, um das Erstarren des zur Ausbildung der Platte verwendeten Materials innerhalb des Formenhohlraums im wesentlichen bis hin zum Durchlaß zu erlauben, ohne daß eine wesentliche Erstarrung des zum Ausbilden der Platte verwendeten Materials oberhalb des Durchlasses erfolgt.

14. Das Verfahren nach Anspruch 15, in dem der Schritt enthalten ist, den Durchgang (80') so auszubilden, daß er eine ringförmige Gestalt hat, die den Stempelzapfen (90') eng umgibt und sich in axialer Richtung mit den ringförmigen Kammern (210, 199) erstreckt.

**Revendications**

1. Pour une utilisation avec une machine à mouler par injection pour produire des disques à ouverture centrale, un dispositif pour contrôler l'écoulement de la matière fondue de formation du disque dans une cavité du moule (25') en forme de disque, comprenant: un assemblage de canal de coulée (12') formant une porte ouverte et relativement étroite (80') pour le passage de la matière fondue de formation du disque dans la cavité du moule, ladite porte étant disposée dans un plan (89) légèrement évidé par rapport au plan général du disque à proximité de la porte, ledit assemblage de canal de coulée comprenant une garniture (152) de canal de coulée ayant un perçage central (68') qui y est formé pour le passage de la matière fondue de formation du disque vers la cavité du moule, et un moyen de dispersion (172) ayant un certain nombre de passages relativement petits d'extrusion (202) qui y sont formés, ledit moyen de dispersion étant monté généralement dans l'extrémité dudit perçage à proximité de ladite cavité du moule pour le passage de la matière fondue de formation du disque à travers lesdits passages d'extrusion avant passage à travers ladite porte, ledit assemblage de canal de coulée comprenant de plus un moyen (90') placé dans la cavité du moule pour mouler une ouverture centrale dans le disque avant solidification de la matière de formation du disque; et un moyen réchauffeur (220) pour maintenir la matière de formation du disque à un état fondu lors de son passage à travers ladite porte (80') vers ladite cavité du moule (25'); ledit moyen de dispersion (172) coopère avec ladite garniture (152) du canal de coulée pour définir une première chambre annulaire (210) pour recevoir la matière fondue de formation du disque, et une seconde chambre annulaire (199) communiquant avec ladite porte, lesdits passages d'extrusion (202) permettant l'écoulement de la matière de ladite première chamber annulaire dans ladite seconde chambre annulaire, lesdites première et seconde chambres annulaires étant des chambres s'étendant axialement.

2. Dispositif selon la revendication 1 où ladite porte (80') est généralement de forme annulaire.

3. Dispositif selon la revendication 2 où ladite porte annulaire (80') a une largeur radiale de l'ordre d'environ 127 microns à environ 500 microns.

4. Dispositif de la revendication 2 où ladite porte (80') est définie par un espace annulaire entre ladite garniture (152) du canal de coulée et ledit moyen de dispersion (172) à proximité de la cavité du moule.

5. Dispositif de la revendication 1 où ledit moyen de dispersion (172) comprend un manchon généralement cylindrique (200) ayant ladite quantité de passages d'extrusion (202) qui y sont formés.

6. Dispositif de la revendication 5 où chacun desdits passages d'extrusion (202) a un diamètre d'ouverture de l'ordre d'environ 0,5 mm à environ 1,5 mm.

7. Dispositif de la revendication 5 où ledit manchon (200) contient une limite radiale entre lesdites première (210) et seconde (199) chambres annulaires, et où ladite seconde chambre annulaire est relativement étroite et a une longueur axiale suffisante pour permettre la réhomogénéisation de la matière en un seul courant d'écoulement annulaire avant passage à travers ladite porte (80').

8. Dispositif de la revendication 1 où ladite garniture (152) du canal de coulée est orientée avec son perçage central s'étendant généralement le long d'un axe central de la cavité du moule.

9. Dispositif de la revendication 1 où ledit moyen réchauffeur (220) comprend un élément chauffant porté dans ledit moyen de dispersion (172).

10. Dispositif de la revendication 1 comprenant une première moitié de moule (14') et une seconde moitié de moule (20') mobiles relativement l'une à l'autre entre une position fermée pour définir la cavité du moule et une position ouverte pour permettre à un disque moulé d'être retiré de la machine, ledit assemblage du canal de coulée (152) étant monté sur ladite première moitié du moule pour un mouvement avec elle et ledit tampon (90') étant monté sur ladite seconde moitié du moule pour traverser la cavité du moule lorsque lesdites moitiés du moule sont fermées pour coopération avec ledit moyen de dispersion (172) pour mouler une ouverture centrale dans le disque avant solidification de la matière de formation du disque.

11. Dispositif de la revendication 10 où ledit tampon (90') a une forme généralement cylindrique pour une réception précise de son extrémité distale dans un évidement de forme correspondante qui est formé dans ledit moyen de dispersion (172) lorsque lesdites moitiés du moule sont fermées.

12. Dispositif de la revendication 1 ou ledit perçage (68') dans ladite garniture (152) du canal de coulée a une première partie de section transversale relativement étroite ouvrant vers la cavité du moule dans une seconde partie de section transversale accrue, ledit moyen de dispersion (172) étant monté généralement dans ladite seconde partie et comprenant un moyen pour diviser la matière fondue en un courant d'écoulement annulaire avant passage à travers lesdits passages d'extrusion et pour recombiner la matière fondue en aval desdits passages d'extrusion en un courant d'écoulement homogène avant passage à travers ladite porte.

13. Dans une machine à mouler par injection

**0 075 042**

pour la production de disques à ouverture centrale, une méthode pour contrôler l'écoulement de la matière fondue de formation du disque dans une cavité (25') du moule en forme de disque comprenant les étapes de: injecter la matière fondue de formation du disque à travers une garniture (152) de canal de coulée ayant un perçage central (68') qui y est formé pour le passage de la matière vers la cavité du moule; diviser la matière passante dudit perçage en un premier courant d'écoulement annulaire; extruder ledit premier courant d'écoulement annulaire (210) à travers une quantité annulaire de passages relativement petits d'extrusion (202); recombiner la matière extrudée en un second courant d'écoulement annulaire sensiblement homogène (199); coupler le second courant d'écoulement annulaire pour un passage dans la cavité du moule à travers une porte (80') disposée dans un plan (89) légèrement évidé par rapport au plan général du disque à proximité de la porte pour remplir la cavité du moule; mouler une ouverture centrale dans le disque au moyen d'un tampon (90') placé dans la cavité du moule; détendre la pression de la matière de formation du disque après avoir rempli le moule; et créer un gradient présélectionné de température entre la garniture du canal de coulée et la cavité du moule pendant le stade de refroidissement du disque moulé pour permettre la solidification de la matière de formation du disque dans la cavité du moule sensiblement jusqu'à la porte sans solidification sensible de la matière de formation du disque en amont de la porte.

14. Méthode de la revendication 15 comprenant l'étape de former la porte (80') pour qu'elle ait une forme annulaire entourant très précisément le tampon (90') et s'étendant axialement avec les chambres annulaires (210, 199).

FIG. 1

FIG. 2

FIG. 3

FIG. 4

FIG.5

FIG.6